Europäisches Patentamt

European Patent Office

Office européen des brevets

(11) Publication number: **0 295 652**
**A2**

(12) # EUROPEAN PATENT APPLICATION

(21) Application number: 88109540.0

(51) Int. Cl.⁴: **B60V 1/22**

(22) Date of filing: 15.06.88

(30) Priority: 16.06.87 JP 150033/87
09.03.88 JP 53780/88
17.03.88 JP 61946/88
28.03.88 JP 71956/88

(43) Date of publication of application:
21.12.88 Bulletin 88/51

(84) Designated Contracting States:
DE FR GB

(71) Applicant: **MITSUBISHI JUKOGYO KABUSHIKI KAISHA**
**5-1, Marunouchi 2-chome Chiyoda-ku**
**Tokyo 100(JP)**

(72) Inventor: **Higashida, Akio Kobe Shipyard &**
**Engine Works of**
**Mitsubishi Jukogyo K.K. 1-1, Wadasaki-cho**
**1-chome**
**Hyogo-ku Kobe-shi Hyogo-ken(JP)**
Inventor: **Matsuoka, Toshio Kobe Shipyard &**
**Engine Works of**
**Mitsubishi Jukogyo K.K. 1-1, Wadasaki-cho**
**1-chome**
**Hyogo-ku Kobe-shi Hyogo-ken(JP)**
Inventor: **Satake, Tokuki Kobe Shipyard &**
**Engine Works of**
**Mitsubishi Jukogyo K.K. 1-1, Wadasaki-cho**
**1-chome**
**Hyogo-ku Kobe-shi Hyogo-ken(JP)**
Inventor: **Yamaguchi, Nobuyuki Takasago**
**Technical Institute**
**Mitsubishi Jukogyo KK 1-1 Shinhama**
**2-chome**
**Arai-cho Takasago-shi Hyogo-ken(JP)**
Inventor: **Sato, Tomohiko Takasago Technical**
**Institute**
**Mitsubishi Jukogyo KK 1-1 Shinhama**
**2-chome**
**Arai-cho Takasago-shi Hyogo-ken(JP)**

(74) Representative: **Henkel, Feiler, Hänzel &**
**Partner**
**Möhlstrasse 37**
**D-8000 München 80(DE)**

(54) **Ground-surface-effect wing plane.**

(57) An improved ground-surface-effect wing plane is disclosed. The improvements reside basically in the provision of a top plate having an upwardly convex surface portion along its front edge and having a principal portion of its entire width formed in an aerofoil section shape over its entire length, a central fuselage section provided at the center of the top plate and having a crewman's seat, end plates disposed along the opposite side surfaces of the top plate over its entire length, and a blower associated with an air exhaust duct and disposed in the rear of the central fuselage section. Besides the aforemen-

tioned basic improvement, various further improvements are proposed such as the provision of spoilers in association with the top plate, a front end cover disposed under the upwardly convex surface portion so that it can adjust an area of an opening in front of the plane body, a thrust switching damper contained in the air exhaust duct, an airflow direction control damper contained in the air exhaust duct, a vertical tail having a rudder assembled therein and disposed at the rear end of the top plate, an intake duct additionally associated with the blower, floats associated with the end plates, or the like.

## GROUND-SURFACE-EFFECT WING PLANE

BACKGROUND OF THE INVENTION:

Field of the Invention:

The present invention relates to a ground-surface-effect wing plane having an intermediate capability between a ship and an aeroplane and capable of gliding above a water surface or a ground surface.

Description of the Prior Art:

A representative one of the ground-surface-effect wing planes in the prior art is illustrated in Fig. 42. As is generally known, the ground-surface-effect wing plane is contemplated such that it is made to fly closely to the water surface or the ground surface to bring about the condition where a pressure of an airflow along the lower surface of a wing is raised by the ground-surface-effect caused by approach to the ground surface, and to thereby increase a lift. Therefore, in order to enhance this effect, a ratio of an area of a wing 132 to that of a body 131 is chosen large as compared to a normal aeroplane. Consequently, in contrast to the fact that generally a floatable speed is said to be about 100 km/hr in the case of a light plane, it can be reduced to 30 - 60 km/hr in the case of the subject plane.

However, the above-described ground-surface-effect wing planes in the prior art involved the following problems to be resolved. That is, the above-mentioned type of ground-surface-effect wing plane had disadvantages that it is hard to turn because it cannot bank (as the wing end strikes against the ground surface) and also its lateral stability is poor. In addition, regarding the effects of the ground-surface-effect wing per se, the clearance between the wing and the ground is about 1/10 x chord length (wing span), and so, if the left and right wings are subjected to waves in an irregular manner when the plane glides above the water surface, the possibility of breaking balance is very high. Moreover, in order to make the plane take off from the water surface, since it is largely influenced by the water, large power for separating from the water is necessary, accordingly an engine and a fan must be enlarged exceeding the necessary extent, and especially in the case of a small-sized ground-surface-effect wing plane, the influence of the water is remarkable.

Furthermore, there is a problem that a water wave drag, a water wave impact, a water film, a water cutting property, etc. of floats 133 provided at the opposite ends of wings 132 would largely influence take-off from the water surface and alighting on the water surface.

In addition, the ground-surface-effect wing plane takes various modes of states such as a floating state on the water surface, a transient sliding state in preparation of a gliding state that is close to a semi-sliding state or sliding state of a motorboat, and a steady ram gliding state after the take-off from the water surface, and since the position of the center of gravity, the position of the center of buoyancy and the position of the aerodynamic center are different at the respective states, upon take-off from the water surface at the initial state of the steady ram gliding, head-up (nose-up) or head-down (nose-down) of a fuselage would arise, hence the fuselage becomes unstable, and a rider would feel difficult to control the plane.

Yet further, since the angles of attack at the above-mentioned respective states are different, a lift-to-drag ratio of the ground-surface-effect wing plane would also vary depending upon the angle of attack. However, in practice, in the initial condition of the stationary ram gliding where the plane floats up and takes off from the water surface by overcoming a drag such as a surface tension, the plane must take off from the water surface more safely at a low speed by raising the lift-to-drag ratio.

SUMMARY OF THE INVENTION:

It is therefore a principal object of the present invention to provide a novel ground-surface-effect wing plane that is free from the above-mentioned problems of such type of planes in the prior art.

According to one feature of the present invention, there is provided a ground-surface-effect wing plane comprising a top plate having an upwardly convex surface portion along its front edge and having a principal portion of its entire width formed in an aerofoil section shape over its entire length, a central fuselage section provided at the center of the top plate and having a seat of crewman or crewman and passenger (hereinafter referred to as crewman), end plates disposed along the opposite side surfaces of the top plate over its entire length, and a blower associated with an air exhaust duct and disposed in the rear of the central fuselage section.

According to another feature of the present invention, there is provided a ground-surface-effect wing plane comprising a top plate having an upwardly convex surface portion along its front edge and having a principal portion of its entire width formed in an aerofoil section shape over its entire length, a central fuselage section provided at the center of the top plate and having a crewman's seat, end plates disposed along the opposite side surfaces of the top plate over its entire length, a blower associated with an air exhaust duct and disposed in the rear of the central fuselage section, and spoilers provided in association with the top plate.

According to still another feature of the present invention, there is provided a ground-surface-effect wing plane comprising a top plate having an upwardly convex surface portion along its front edge and having a principal portion of its entire width formed in an aerofoil section shape over its entire length, a central fuselage section provided at the center of the top plate and having a crewman's seat, end plates disposed along the opposite side surfaces of the top plate over its entire length, a front end cover disposed under the upwardly convex surface portion so that it can adjust an area of an opening in front of the plane body, and a blower associated with an air exhaust duct containing a thrust switching damper therein and disposed in the rear of the central fuselage section.

According to yet another feature of the present invention, there is provided a ground-surface-effect wing plane comprising a top plate having an upwardly convex surface portion along its front edge and having a principal portion of its entire width formed in an aerofoil section shape over its entire length, a central fuselage section provided at the center of the top plate and having a crewman's seat, end plates disposed along the opposite side surfaces of the top plate over its entire length, and a blower associated with an air exhaust duct containing an airflow direction control damper therein at its exhaust port end and disposed in the rear of the central fuselage section.

According to a further feature of the present invention, there is provided a ground-surface-effect wing plane comprising a top plate having an upwardly convex surface portion along its front edge and having a principal portion of its entire width formed in an aerofoil section shape over its entire length, a central fuselage section provided at the center of the top plate and having a crewman's seat, end plates disposed along the opposite side surfaces of the top plate over its entire length, a blower associated with an air exhaust duct and disposed in the rear of the central fuselage section, and a vertical tail having a rudder assembled therein and disposed at the rear end of the top plate.

According to a still further feature of the present invention, there is provided a ground-surface-effect wing plane comprising a top plate having an upwardly convex surface portion along its front edge and having a principal portion of its entire width formed in an aerofoil section shape over its entire length, a central fuselage provided at the center of the top plate and having a crewman's seat, end plates disposed along the opposite side surfaces of the top plate over its entire length, and a blower associated with an air intake duct and an air exhaust duct and disposed in the rear of the central fuselage section.

According to a yet further feature of the present invention, there is provided the above-featured ground-surface-effect wing plane further comprising floats provided in association with the end plates and having their bottom portions formed in a wedge shape.

According to an additional feature of the present invention, there is provided the above-featured ground-surface-effect wing plane further comprising floats provided in association with the end plates and having their bottom portions formed to have a curved surface.

According to still another feature of the present invention, there is provided a ground-surface-effect wing plane comprising a top plate having an upwardly convex surface portion along its front edge and having a principal portion of its entire width formed in an aerofoil section shape over its entire length, a central fuselage section provided at the center of the top plate, having a crewman's seat and serving also as a float a blower disposed in the rear of the central fuselage section, end plates disposed along the opposite side surfaces of the top plate with their principal surfaces directed in the vertical direction, whose bottom end portions also serve as floats projecting downwards from the bottom of the central fuselage section, and gliding plates formed in a sled shape and disposed at the bottom of the end plates and the central fuselage section.

According to yet another feature of the present invention, there is provided a ground-surface-effect wing plane comprising a top plate having an upwardly convex surface portion along its front edge and having a principal portion of its entire width formed in an aerofoil section shape over its entire length, a central fuselage section provided at the center of the top plate and having a crewman's seat, end plates disposed along the opposite side surfaces of the top plate over its entire length, and a blower associated with an air exhaust duct and disposed in the rear of the central fuselage section, wherein when the plane is floating on the water surface under a normal condition, the bottom edges of the end plates have a downward inclination of 3 degrees to 12 degrees from their tail ends towards their front ends with respect to the water line.

According to the present invention, owing to the above-described structural features, the following advantages can be obtained:

(1) As the top plate has an upwardly convex surface portion along its front edge, an air resistance is small, also a path length of an airflow flowing along the aerofoil surfaces becomes longer along the upper surface than along the lower surface by the amount corresponding to the upwardly convex portion, hence a flow velocity becomes larger by the corresponding amount, thus a static pressure directed in the perpendicular direction to the airflow becomes smaller at the upper surface, and therefore, a large lift is generated.

(2) Since the top plate occupying a principal portion of the fuselage has the aerofoil section shape, in cooperation with the provision of the upwardly convex surface portion a large lift can be generated.

(3) Since the end plates are disposed along the opposite side surfaces of the top plate over its entire length, air can be introduced to the under of the plane body without any waste, and thereby a floating efficiency can be raised. In other words, a high ground-surface-effect can be realized.

(4) As spoilers are provided in association with the top plate, nose-up and sudden stop become easy, and banking becomes easy by providing the spoilers symmetrically on both the left and right sides and manipulating only the spoiler on one side.

(5) As a blower associated with an air exhaust duct is disposed in the rear of the central fuselage section and also a thrust switching damper is provided there, take-off from the water, transient gliding, high-speed floatable gliding, etc. can be performed arbitrarily by switching the exhaust air directed backwards to that directed downwards.

(6) Since an airflow direction control damper is contained at an exhaust port end of a blower associated with an air exhaust duct, the direction of the flow of the exhaust air can be changed by this damper, and thereby, change of the direction and turning of the plane can be performed arbitrarily.

(7) Since a rudder is assembled in a vertical tail, direction control can be carried out efficiently. Especially, in the case where the rudder is disposed just behind the air exhaust port, this effect is remarkable.

(8) As a blower associated with an air intake duct and an air exhaust duct is provided, an air flow can be surrounded entirely by a duct, and so, influence of noise upon a crewman can be eliminated.

(9) As the bottom ends of floats are formed in a wedge shape or to have a curved surface, mitigation of an impact upon alighting on the water and reduction of a resistance upon take-off from the water is remarkable.

(10) Since a central fuselage section having a crewman's seat also serves as a float to increase a buoyancy, and sliding plates of sled-like shape facilitate floating like a sled of an aquatic ski and support the plane at its front and rear portions, and so, steady ram gliding can be realized under a well balanced condition.

(11) Since when the ground-surface-effect wing plane is floating on the water surface under a normal condition, the bottom edges of the end plates have a downward inclination of 3 degrees to 12 degrees from their tail ends towards their front ends with respect to the water line, under an initial condition of the steady ram gliding the bottom edges of the end plates coincide with the water surface, thereby the volume of air filled under the fuselage having an aerofoil section shape is increased to improve a lift.

The above-mentioned and other objects, features and advantages of the present invention will become more apparent by reference to the following description of a number of preferred embodiments of the invention taken in conjunction with the accompanying drawings.

BRIEF DESCRIPTION OF THE DRAWINGS:

In the accompanying drawings:

Fig. 1 is a schematic plan view of a first preferred embodiment of the present invention;

Fig. 2 is a schematic left side view of the first preferred embodiment;

Fig. 3 is a schematic front view of the first preferred embodiment;

Fig. 4 is a cross-section view taken along line IV-IV in Fig. 1 as viewed in the direction of arrows;

Fig. 5 is a schematic left side view showing the first preferred embodiment under a stationary or low-speed traveling condition on the water surface;

Fig. 6 is a schematic left side view showing the first preferred embodiment at transient sliding state;

Fig. 7 is a schematic left side view showing the first preferred embodiment at a high-speed floatable sliding state;

Fig. 8 is a schematic plan view of a second preferred embodiment of the present invention;

Fig. 9 is a schematic plan view of a third preferred embodiment of the present invention;

Fig. 10 is a schematic left side view of the third preferred embodiment;

Fig. 11 is a schematic front view of the third preferred embodiment;

Fig. 12 is a schematic plan view of a fourth preferred embodiment of the present invention;

Fig. 13 is a cross-section view taken along line XIII-XIII in Fig. 12 as viewed in the direction of arrows;

Fig. 14 is a schematic plan view of a fifth preferred embodiment of the present invention;

Fig. 15 is a schematic left side view of a sixth preferred embodiment of the present invention;

Fig. 16 is a schematic front view of the sixth preferred embodiment;

Fig. 17 is a detailed cross-section view of a front end portion in Fig. 15 (a left end portion in the figure);

Fig. 18 is a detailed cross-section view of the proximity of a switching damper 18 in Fig. 15;

Fig. 19 is a schematic left side view showing the sixth preferred embodiment at a low-speed traveling state on the water surface;

Fig. 20 is a schematic left side view showing the sixth preferred embodiment at a stationary hovering state;

Fig. 21 is a schematic left side view showing the sixth preferred embodiment at a transient sliding state;

Fig. 22 is a schematic left side view showing the sixth preferred embodiment at a high-speed floatable sliding state;

Fig. 23 is a schematic plan view of a seventh preferred embodiment of the present invention;

Fig. 24 is a schematic left side view of the seventh preferred embodiment;

Fig. 25 is a schematic plan view of an eighth preferred embodiment of the present invention;

Fig. 26 is a schematic left side view of the eighth preferred embodiment;

Figs. 27 through 30 are cross-section views as viewed in the axial direction of a fuselage showing only one side of various modified embodiments, in which the end plates in the first to eighth preferred embodiments are provided with respective float members;

Fig. 31 is a schematic left side view of a nineth preferred embodiment of the present invention;

Fig. 32 is a schematic front view of the nineth preferred embodiment;

Fig. 33 shows a front sliding plate 37 in the nineth preferred embodiment in greater detail, a left side view being shown at (a), a plan view being shown at (b), a front view being shown at (c), and a perspective view being shown at (d);

Fig. 34 shows a rear sliding plate 38 in the nineth preferred embodiment in greater detail, a left side view being shown at (a), a plan view being shown at (b), and a front view being shown at (c);

Fig. 35 is a schematic perspective view of a tenth preferred embodiment of the present invention;

Fig. 36 is a schematic left side view showing the tenth preferred embodiment at a floating state on the water surface;

Fig. 37 is a schematic left side view showing the tenth preferred embodiment at a transient sliding state;

Fig. 38 is a schematic left side view showing the tenth preferred embodiment at an initial state of steady ram gliding;

Fig. 39 is a schematic left side view showing the tenth preferred embodiment likewise at a steady ram gliding state;

Fig. 40 is a schematic perspective view of an eleventh preferred embodiment of the present invention;

Fig. 41 is a schematic perspective view of a twelveth preferred embodiment of the present invention; and

Fig. 42 is a schematic perspective view of one example of the ground-surface-effect wing planes in the prior art.

DESCRIPTION OF THE PREFERRED EMBODIMENTS:

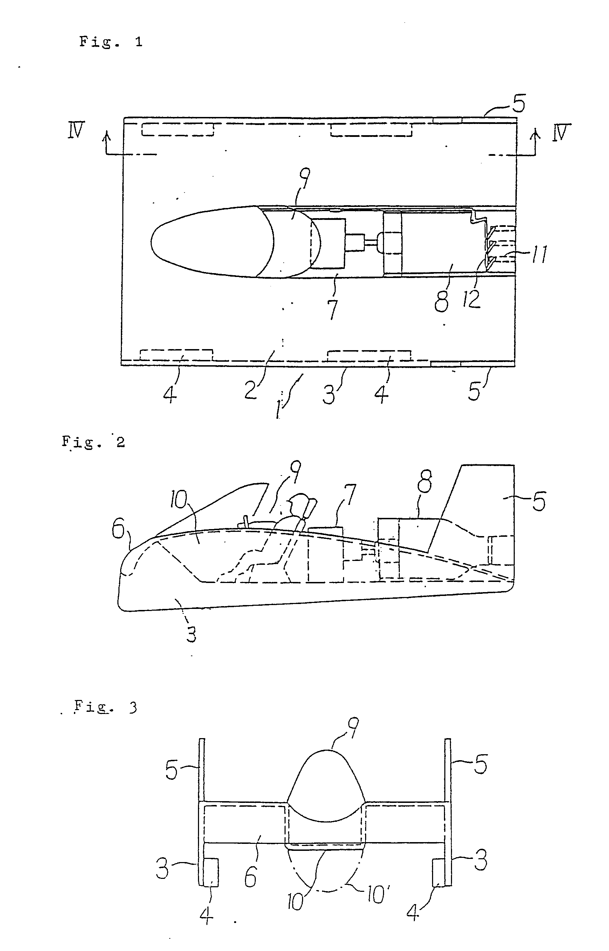

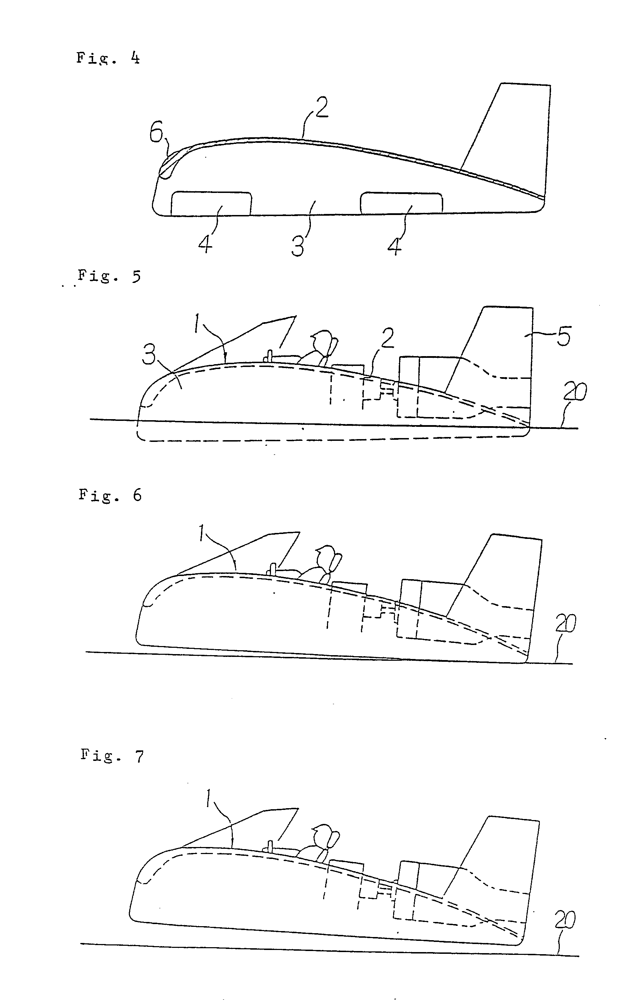

Now, a first preferred embodiment of the present invention will be described with reference to Figs. 1 to 4. In these figures, a main body 1 is generally formed in an aerofoil-like configuration, and consists of a top plate 2 and end plates 3. As shown in Fig. 4, the top plate 2 has an upwardly convex surface portion 6 along its front edge, and is formed in an aerofoil section shape over its entire length. The upwardly convex surface portion 6 is formed in a moderately curved shape constituting an origin of an aerofoil section shape, and it has the effects of reducing an air resistance and making a lift large and change smoothly during traveling. The tip end of the upwardly convex surface portion 6 is designed to have such an angle of attack that it may become effective upon gliding of the plane body. In addition, in the central portion of the top plate 2 is provided a loading area where a crewman's seat 9 and a blower 7 are to be loaded. The bottom portion of the loading area 10 could be expanded as shown at 10 so that a buoyancy may be generated thereby when the plane is held stationary or when it alights on the water. The end plates 3 are disposed along the opposite side surfaces of the top plate 2 over its entire length and associated with float members 4 at their bottom portions. The end plates 3 are provided for the purpose of preventing an air flow along the lower surface of the top plate 2 from flowing out through the opposite side portions to enhance the ground-surface-effect when the plane body performs floatable sliding, and also for the purpose of improving an aerodynamic stability. In the case of the illustrated embodiment, the float members 4 are disposed on the inside of the end plates 3 at four locations in total, and serve as a source of a buoyancy upon floating on the water surface.

At the rear end on the opposite sides of the top plate 2 are disposed vertical tails 5, which are provided for the purpose of maintaining stability in the lateral direction when the plane body is performing floatable sliding. The blower 7 is formed, for instance, in such manner that an engine is employed as a drive source and an axial fan is employed as a blowing source and coupled to the engine, and it generates an airflow serving as a propelling force for the plane body. The generated airflow is exhausted backwards from an air exhaust duct 8 connected to the blower 7 and produces a thrust. At the exhaust port end of the air exhaust duct 8, an airflow direction control damper 11 is assembled in the duct 8, and control of the traveling direction of the plane body is effected by remotely operating the damper 11 from the crewman's seat 9 via a linkage 12. It is to be noted that both the top plate 2 and the side plates 3 are constructed by making use of an appropriate combination of reinforced resin materials and honeycomb structure members so that they may have satisfactorily light weight and satisfactorily high mechanical strength and a necessary gliding capability may be obtained with a blower 7 having an extremely small-sized drive source.

Now description will be made on the operation of the above-described embodiment.

The operation of this plane is generally classified into low-speed traveling and high-speed floatable sliding. In the low-speed traveling, as shown in Fig. 5, similarly to the ships in the prior art, the plane body 1 travels in contact with the water surface 20 under the action of a buoyancy generated by the above-described float members 4 or the loading area 10' and a thrust generated by the exhaust airflow from the air exhaust duct 8 produced by the blower 7. In order to transfer to high-speed floatable sliding, the air flow rate of the blower 7 is increased. More particularly, by increasing the rotational speed of the fan, the thrust generated by the exhaust airflow from the air exhaust duct 8 is increased, thereby the traveling speed of the plane body is increased, as a result an air pressure acting upon the inner surface of the top plate 2 increases, hence the plane takes a transient sliding state where the front portion of the plane body floats up but the rear portion is kept in contact with the water as shown in Fig. 6, and then, by further increasing the rotational speed of the fan in the blower 7, the plane takes a high-speed floatable sliding state where the plane body has perfectly floated above the water surface 20 as shown in Fig. 7. A turning operation is carried out by remotely manipulating the airflow direction control damper 11 via the linkage 12 and thereby changing the direction of the thrust generated by the exhaust of air. It is also possible to operate the damper 11 by means of the well-known electric motor and the like in place of the linkage 12. When it is desired to stop the plane body, it can safely alight on the water and stop there by the operations inverse to the above-described operations for floating up, that is, by reducing the rotational speed of the fan in the blower 7.

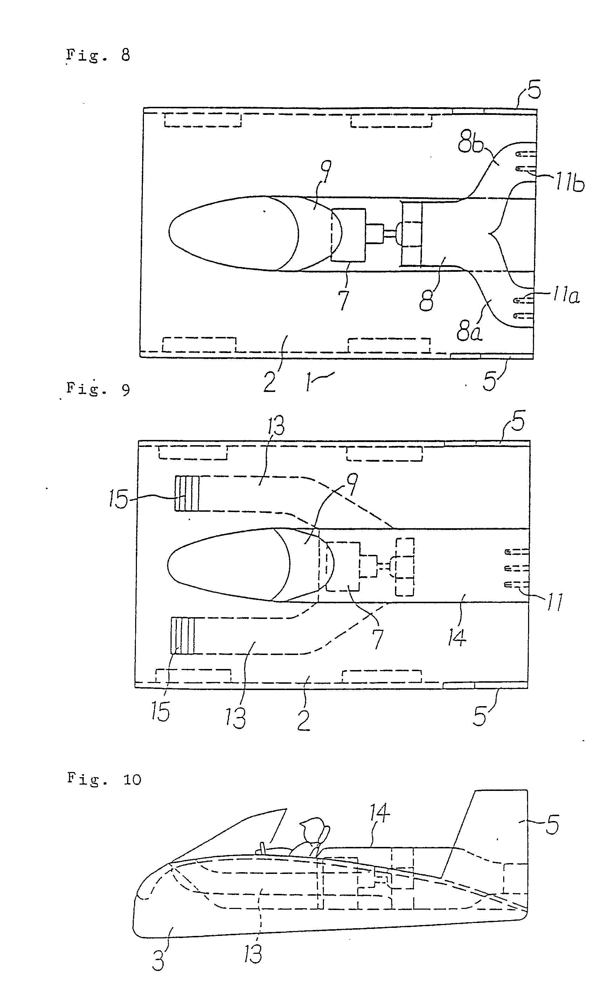

Next, a second preferred embodiment of the present invention will be described with reference to Fig. 8.

A difference of this embodiment from the first preferred embodiment resides in that the outlet of the air exhaust duct 8 is branched to the left and right exhaust ducts 8a and 8b as shown in Fig. 8. In the outlet end portions of the respective exhaust ducts 8a and 8b are assembled airflow direction control dampers 11a and 11b, respectively, which are interlocked by means of a linkage not shown and remotely operated from the crewman's seat 9. According to this modified embodiment, the advantage that a turning performance is improved, can be obtained by branching the exhaust duct into the left and right exhaust ducts. The other capabilities are almost similar to those of the first preferred embodiment.

Now, a third preferred embodiment of the present invention will be described with reference to Figs. 9 to 11.

In this modified embodiment, air intake ports 15 for the blower 7 are provided on the left and right sides, respectively, in the front portion of the top plate 2. The airflow generated by the blower 7 is led from these air intake ports 15 through front ducts 13 to a rear duct 14 which covers the whole of the blower 7 and serves also as an air exhaust duct. In the outlet end portion of the rear duct 14 is assembled an airflow direction control damper 11, which has an almost similar capability to that provided in the first preferred embodiment. According to the present embodiment, owing to the fact that the blower 7 is covered by the duct to form a tightly closed structure, the advantage that influence of noise of the blower 7 to the crewman and to the environment of the plane can be suppressed, is obtained. With respect to the other points, this embodiment is similar to the first preferred embodiment. It is to be noted that like the second preferred embodiment, the exhaust outlet of the rear duct 14 could be branched into left and right exhaust ducts.

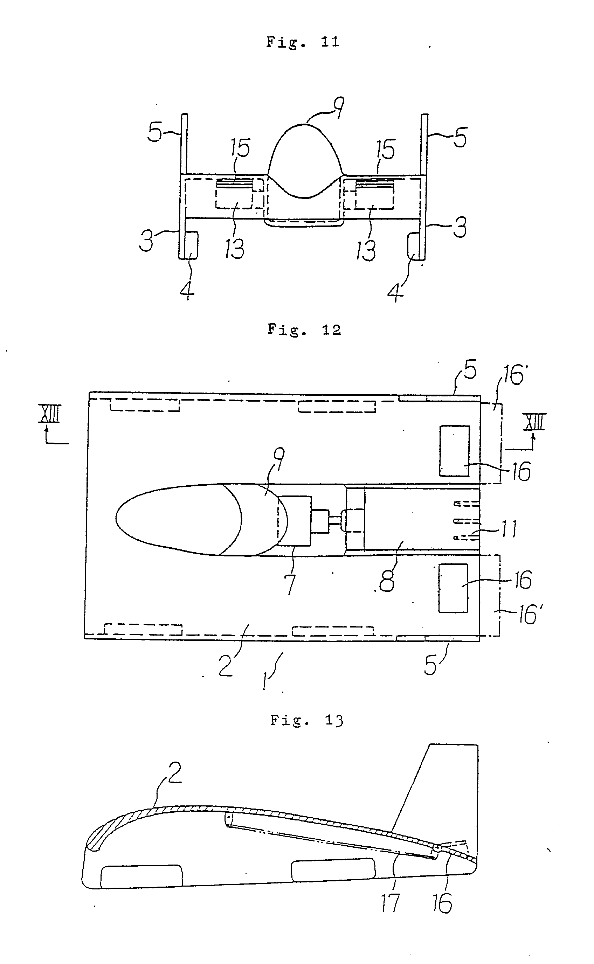

Next, a fourth preferred embodiment of the present invention will be described with reference to Figs. 12 and 13.

In this embodiment, spoilers 16 are disposed at two locations on the left and on the right in the rear portion of the top plate 2, and they are remotely operated from the crewman's seat 9 via a linkage 17 simultaneously on the left and on the right or individually.

The spoilers 16 have the capabilities of enhancing nose-up of the plane body, increasing a lift and facilitating separation from the water surface in the course of transferring from the low-speed traveling to the high-speed floatable sliding. In addition, they are also used in the case of abruptly descending from the high-speed floatable sliding state. Furthermore, upon direction control for the plane body, a turning performance can be improved by banking the plane body by manipulating the spoilers 16 in addition to the manipulation of the airflow direction control damper 11. Although the plane body turns while sliding at a nearly horizontal attitude if only the airflow direction control damper 11 is used, by pulling up, for instance, the left-hand spoiler 16 the airflow along the aerofoil back surface of the top plate 2 becomes unbalanced on the left and on the right, a moment produced by this unbalance assists the leftward turning, at the same time, distribution of a lift also becomes unbalanced, and this unbalance in the distribution of a lift becomes effective for banking the plane body 1 so as to tilt leftwards. It is to be noted that the mount positions of the spoilers 16 could be changed to the positions 16' at the rear end of the top plate 2 as depicted by dash-dot lines. The other capabilities are almost similar to those of the first preferred embodiment.

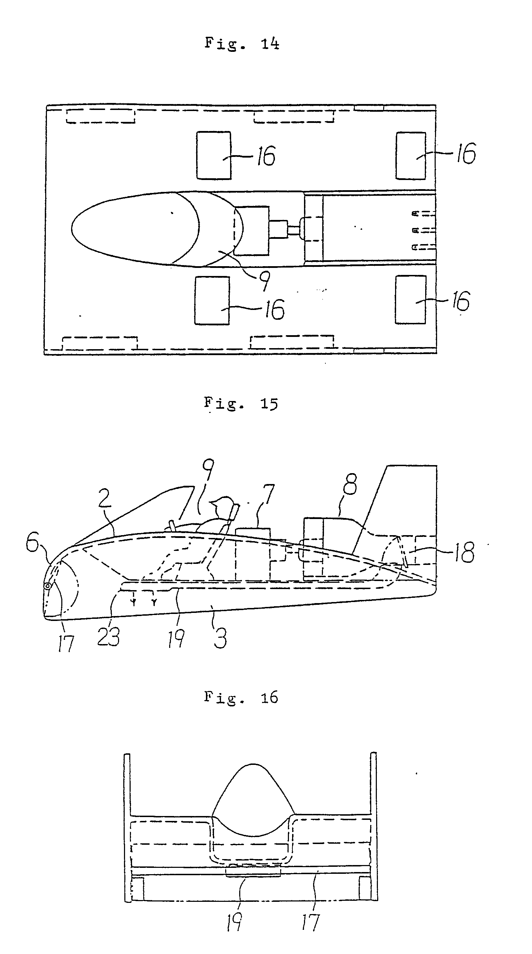

Now, description will be made on a fifth preferred embodiment of the present invention with reference to Fig. 14.

Comparing Fig. 14 with Fig. 12 showing the fourth preferred embodiment, spoilers 16 are additionally provided two on the left and on the right in the middle portion of the top plate 2, and thus four spoilers 16 in total are provided. These spoilers 16 are also remotely manipulated from the crewman's seat 9 via a linkage not shown. According to this embodiment, the advantage that an abruptly descending performance is enhanced, can be obtained. It is to be noted that like the fourth preferred embodiment, the rear spoilers 16 could be mounted to the rearmost end of the plane body.

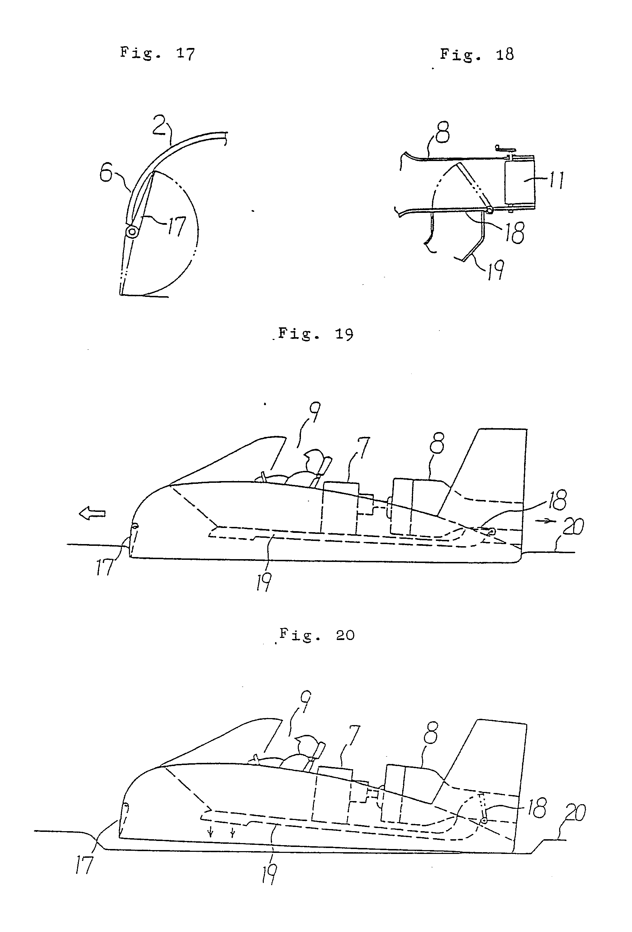

Next, a sixth preferred embodiment of the present invention will be explained with reference to Figs. 15 to 18. In Figs. 15 and 16, under the upwardly convex surface portion 6 along the front edge of the top plate 2, is pivotably mounted a front end cover 17 for adjusting an area of a front opening so that it can be swung by means of a linkage not shown. A thrust switching damper 18 is disposed in front of an outlet end of an air exhaust duct 8 connected to a blower 7, and another duct 19 for hovering is connected to the damper 18. The front end cover 17 is shown in more detail in Fig. 17, and the thrust switching damper 18 is shown in greater detail in Fig. 18. By lowering the front end cover 17 as shown by double-dot chain lines in Fig. 17 and transferring the thrust switching damper 18 as shown by double-dot chain lines in Fig. 18, an air flow generated by the blower 7 is confined in the space delimited by the top plate 2, the end plates 3 and the front end cover 17 through the hovering duct 19, and so, the plane body takes a hovering state and floats up on the water surface. In other words, the plane body can stationarily float. The front end cover 17 and the thrust switching damper 18, respectively, can be remotely manipulated from the crewman's seat 9 via linkages not shown. The position of the exhaust port 23 of the hovering duct 19 is not specifically limited, but it could be chosen at the rear portion (the position being appropriately selected in design taking into consideration the weight of the duct and a hovering efficiency).

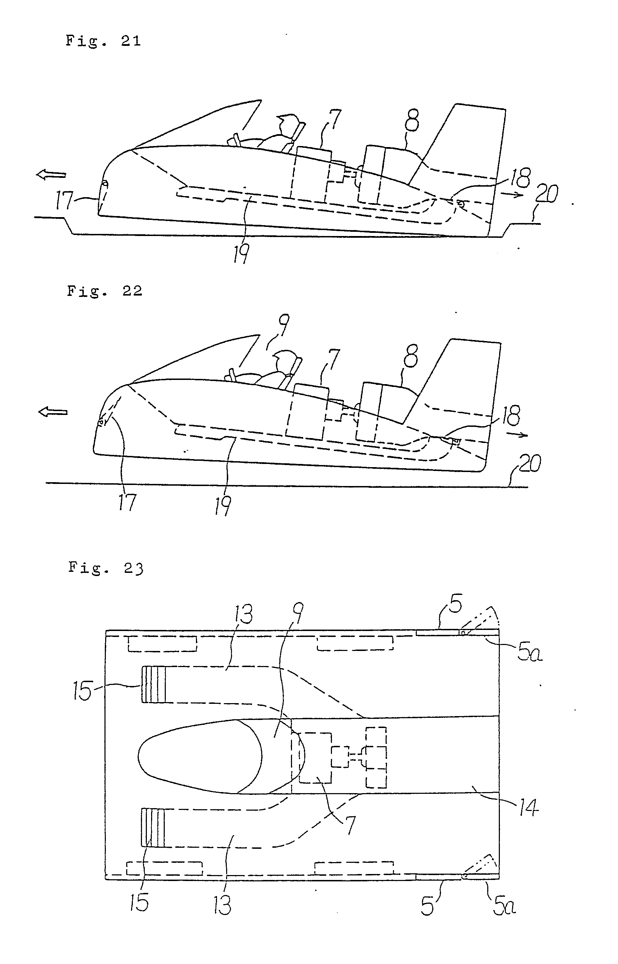

Now description will be made on the operation of the plane according to this embodiment. Under the low-speed traveling condition, the thrust switching damper 18 is held at a closed state as shown in Fig. 19, hence an airflow flows as shown by an arrow and acts as a thrust, and so, the plane body advances. While the front end cover 17 is shown at a lowered state, in the case of only low-speed traveling, it could be held at a raised state. Next, a hovering state, that is, the state floating above the water surface is shown in Fig. 20. In this state, the thrust switching damper 18 is fully opened to the side of the hovering duct 19, but the thrust side is fully closed, hence an airflow is led downwards through the hovering duct 19 as shown by arrows, and in combination with the tightly closing effect produced by lowering the front end cover 17, the plane body floats up stationarily. Subsequently, by manipulating the thrust switching damper 18 so as to distribute the airflow to the thrust side and the hovering duct side, a hovering low-speed traveling state is realized. While the lift for the plane body is being increased by increasing the air flow rate of the blower 7, that is, by raising the rotational speed of the blower fan, the thrust switching damper 18 is gradually transferred to the thrust side, and when a transient sliding state has been established as shown in Fig. 21, if the front end cover 17 is raised and the air flow rate of the blower 7 is increased, then a steady high-speed floatable sliding state is established as shown in Fig. 22. When the above-described transient sliding state is maintained, if the spoilers 16 or 16' employed in the fourth and fifth preferred embodiments are used jointly, then the nose-up of the plane body is facilitated, a lift is further increased by enlarging the angle of attack, and thereby the plane body can smoothly transfer to a high-speed floatable sliding state.

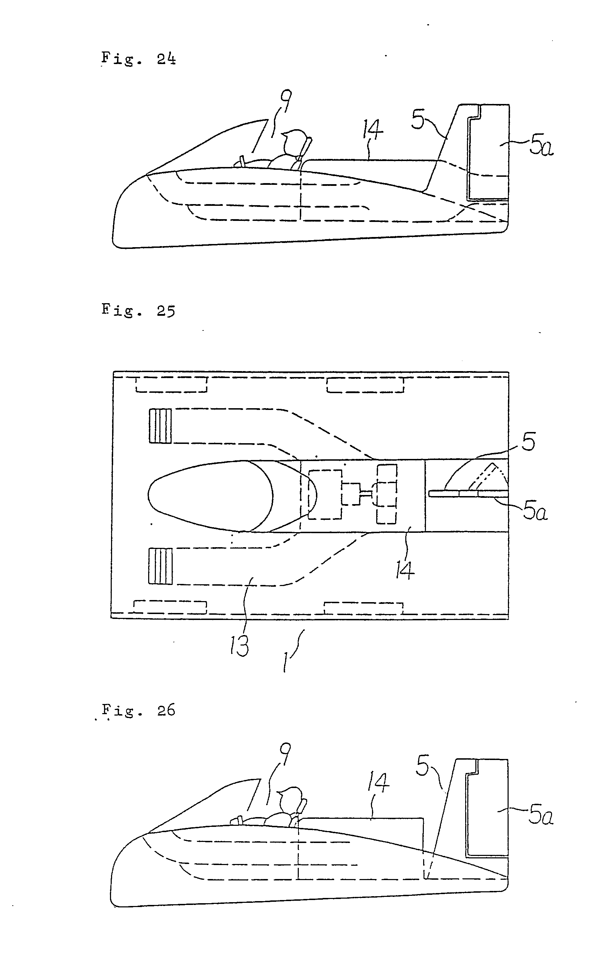

Next, a seventh preferred embodiment of the present invention will be described with reference to Figs. 23 and 24.

In this preferred embodiment, rudders 5a are assembled in vertical tails 5 to achieve similar roles to the airflow direction control damper 11 assembled in the rear duct 14, and either they can be used jointly with the airflow direction control damper 11 or the airflow direction 11 can be abolished by employing the rudders 5a. The manipulation of the rudder 5a is remotely controlled from the crewman's seat 9 through a linkage not shown.

Now, description will be made on an eighth preferred embodiment of the present invention with reference to Figs. 25 and 26.

In this preferred embodiment, a vertical tail 5 is disposed at one location in the central rear portion of the main body 1, also a rudder 5a is assembled in the vertical tail 5, and they are positioned just behind the rear duct 14 so that the rudder 5a may achieve a similar role to the airflow direction control damper 11 assembled in the rear duct 14. The rudder 5a can be used jointly with the airflow direction control damper 11, or the airflow direction control damper 11 can be abolished by employing the rudder 5a. The manipulation of the rudder 5a is remotely controlled from the crewman's seat 9 through a linkage not shown.

According to the above-described embodiment, improvements in a turning performance can be realized owing to the fact that the high-speed exhaust airflow from the rear duct 14 is directly received by the rudder 5a.

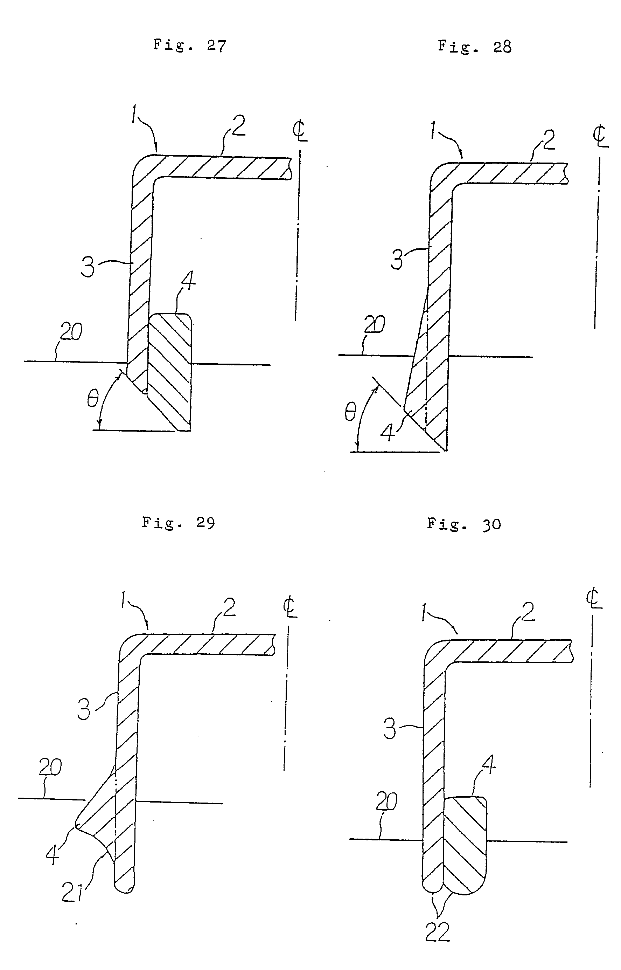

Now, with respect to the cross-section configuration of the bottom portion of a float member 4 provided at the lower end of the end plate 3, various preferred embodiments are illustrated in Figs. 27 to 30. These figures are all cross-section views of a float member 4 associated with an end plate 3 as viewed in the axial direction of a plane body 1.

Fig. 27 shows one preferred embodiment, in which a tapered surface at an angle θ with respect to the water surface is formed from a tip end of a float member 4 disposed on the inner surface of the end plate 3 towards the outer surface of the end plate 3 so as to form a wedge-shaped cross-section. When the plane alights on the water surface, such type of float member 4 would enter the water surface like a wedge, hence entrance of water splash to the inside of the plane body can be reduced, and mitigation of a water wave impact upon alighting on the water can be realized.

Fig. 28 shows another preferred embodiment, in which like the above-described embodiment, a tapered surface at an angle θ with respect to the water surface is formed from a tip end of the end plate 3 towards its outer surface so as to form a wedge-shaped cross-section. Difference of this embodiment from the preceding embodiment resides in that the float member 4 is integrated with the end plate 3 and the cross-section area of the float portion is reduced. Owing to this difference, in addition to the above-described advantages that upon alighting on the water, entrance of water splash to the inside of the plane body can be reduced and mitigation of a water wave impact can be realized, reduction of a water wave resistance upon take-off from the water can be achieved. The taper angle θ is generally selected to be about 45°, but it is not limited to such value.

In the embodiment shown in Fig. 29, the end plate 3 and the float member 4 are integrated, and in contrast to the tapered flat surface employed in the preceding two embodiments, downwardly concave surface 21 is formed to achieve similar effects to the embodiment shown in Fig. 28.

Fig. 30 shows still another preferred embodiment, in which rounded surfaces 22 are formed at the tip ends of the end plate 3 and the float member 4 to achieve mitigation of a water wave impact upon alighting on the water.

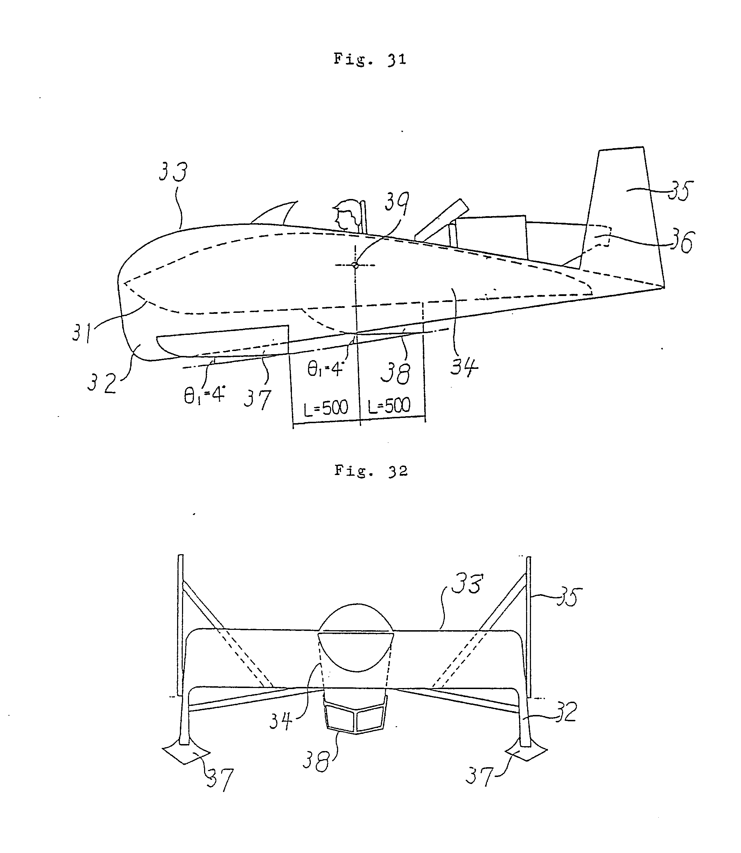

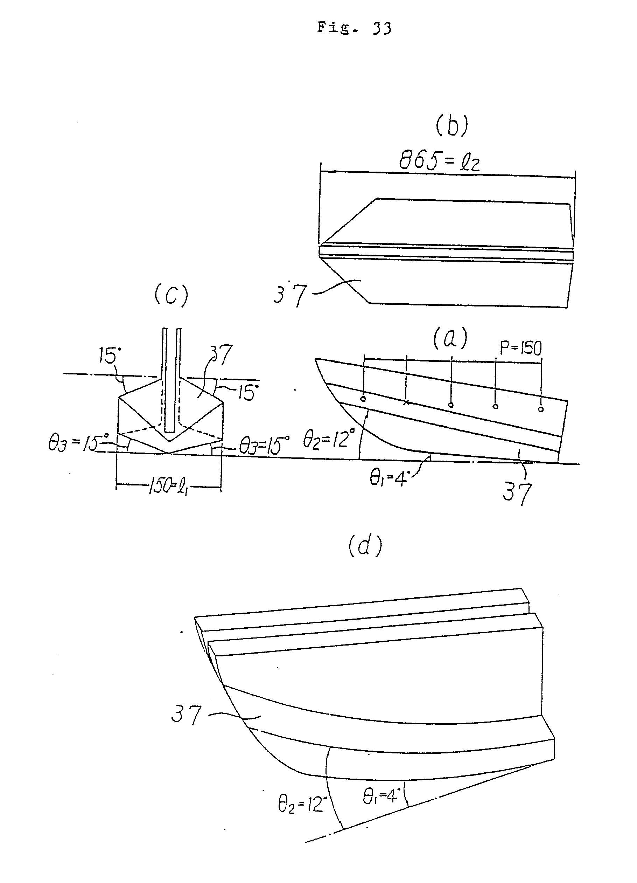

Next, a nineth preferred embodiment of the present invention will be explained with reference to Figs. 31 to 34, in which Fig. 33 shows a detailed structure of a front sliding plate 37 and Fig. 34 shows a detailed structure of a rear sliding plate 38.

In these figures, reference numeral 31 designates a bottom portion of a central fuselage section 34 of elongated shape disposed at the center of a plane body, which also serves as a float and has a crewman's seat therein. The crewman's seat is disposed in the front portion of the inside of the central fuselage section 34, and an engine and a subsidiary machine such as a fan not shown for driving the plane body are disposed in the rear portion thereof. Also, the volume of this central fuselage section 34 submerged under the water surface achieves the function of a float forming a buoyancy source. In addition, to the rear portion of the bottom portion 31 is mounted a rear sliding plate 38 of sled shape. Reference numeral 32 designates end plates for preventing air having flown into the space under a top plate 33 from escaping to the opposite sides in order to improve the ground-surface-effect of the plane body. To the bottom of the front portion of each end plate 32 is mounted a front sliding plate 37 of sled shape. Like the previously described respective embodiments, the top plate 33 has an upwardly convex surface portion along its front edge and has a principal portion of its entire width formed in an aerofoil section shape over its entire length so that an aerodynamic lift may be increased. As illustrated in the figures, the above-mentioned central fuselage section 34 is formed in the central portion of the top plate 33. Reference numeral 35 designates a vertical tail for stabilizing straight traveling of the plane body. Reference numeral 36 designates an air exhaust duct which backwardly ejects an airflow acting as a thrust source for the plane body. Provision is made such that the front sliding plate 37 can be mounted in a somewhat displaceable manner in the back and forth directions with respect to the position 39 of the center of gravity of the plane body.

In this preferred embodiment, as shown in Fig. 33 a pitch p = 150 mm in the back and forth directions for the mountable positions is chosen, and so, adjustment in position of the front sliding plate 37 is effected with such pitch. The rear sliding plate 38 is also adapted to be mounted in a somewhat displaceable manner in the back and forth directions with respect to the position 39 of the center of gravity of the plane body. In the illustrated embodiment, as shown in Fig. 34 a pitch p = 150 mm in the back and forth directions for the mountable positions is chosen, and so, adjustment in position of the rear sliding plate 38 is effected with such pitch.

In the illustrated embodiment, an inclination angle $\theta_1$ of the front and rear sliding plates 37 and 38 is chosen to be 4 degrees, and the rear ends of the front sliding plate 37 and the rear sliding plate 38 are mounted respectively at equal distances L = 500 mm from the position 39 of the center of gravity of the plane body, as shown in Fig. 31. This inclination angle $\theta_1$ is determined on the basis of a float-up angle or a take-off angle of the plane body, and normally it is within the range from three degrees to six degrees. In addition, elongation of the equal distance L from the position 39 of the center of gravity is limited by the shape of the plane body, and if it is shortened, sometimes stability would be deteriorated upon float-up, take-off from the water or alighting on the water. In view of such circumstances, it is desirable to select the equal distance L to be 1/8 - 1/5 times the total length of the plane body. (In this preferred embodiment, the factor is chosen at 1/8 = 500/4000.). This can be deduced from the fact that the center of an aerodynamic lift of a plane body having an aerofoil section shape is generally located at the position separated from the front end by 1/4 times the total length.

The position 39 of the center of gravity of the plane body coincides with the position of the center of an aerodynamic lift of the body in the case of the illustrated embodiment. The center of an aerodynamic lift is determined through a wind tonnel test for a model of the plane body of aerofoil section shape, and weight distribution of the plane body is planned so that the position of the center of gravity may coincide with the position of the determined center of an aerodynamic lift. According to the above-mentioned planning, the plane body is subjected to upward drags of water at the positions separated in the axial direction of the plane body by equal distances from the position of the center of gravity via the front sliding plate 37 and the rear sliding plate 38, respectively, and since these drags suppresses the sum of the moments of forces about the center of gravity to minimum, nose-up or nose-down upon take-off from the water would not arise, and a crewman can operate the plane without anxiety.

By way of example, in the case of the illustrated embodiment, the front sliding plate 37 consists of a sled-like plate having a width $l_1$ = 150 mm and a length $l_2$ = 865 mm, whose lower surface (the water contact surface upon floating) has an inclination angle of $\theta_1$ = 4°, whose upper surface (the float-up-effect surface when it is submerged in the water) has an inclination angle of $\theta_2$ = 12°, and whose cross-section has a V-shape forming an angle $\theta_3$ = 15° with respect to the water surface. It is important that an excessively large rigidity should not be required for the end plate 32 by appropriately selecting the width $l_1$ of this front sliding plate 37. The inclination angles $\theta_1$ = 4 and $\theta_2$ = 12° are determined on the basis of the attitude upon take-off from the water of the plane body (take-off angle from the water = angle of attack upon take-off from the water). However, preferably the angle of attack should be 5 - 10°, and accordingly, an inclination angle of the lower surface of $\theta_1$ = 3 - 6° and an inclination angle of the upper surface of $\theta_2$ = 10° - 15° are preferable.

The rear sliding plate 38 consists of a sled-like plate having a width $l_3$ = 400 mm and a length $l_4$ = 900 mm, the lower surface of the sled-like plate has an inclination angle $\theta_1$ = 4°, and the upper surface of the sled-like plate is held in contact with the bottom portion 31 of the central fuselage section 34. The V-shape of the cross-section has an inclination angle $\theta_3$ = 15° with respect to the water surface. The technical concept for this rear sliding plate 38 is similar to that for the front sliding plate 37.

While the front sliding plates 37 are provided two and the rear sliding plate 38 is provided only one in the illustrated embodiment, modification thereto could be made arbitrarily such that two sliding plates similar to the front sliding plates 37 are provided on the left and on the right as modified rear sliding plates 38, resulting in four sliding plates in total, or that one front sliding plate is additionally provided at the front portion of the bottom portion 31 of the central fuselage section 34, resulting in two sliding plates in total.

It is to be noted that the numerical values for the various dimensions and angles indicated in the above-described embodiments were given merely by way of examples, and the present invention should not be limited to these numerical values.

Now, a tenth preferred embodiment of the present invention will be described with reference to Figs. 35 to 39.

A ground-surface-effect wing plane according to the tenth preferred embodiment is shown in a perspective view in Fig. 35. Figs. 36 to 39 show the plane body at different states, respectively, a floating state on the water surface being shown in Fig. 36, a transient sliding state being shown in Fig. 37, an initial state of steady ram gliding being shown, and the plane body at a steady ram gliding state is shown in Fig. 39.

In these figures, reference numeral 51 designates a top plate which has an upwardly convex surface portion along its front edge and has a principal portion of its entire width formed in an aerofoil section shape like the above-described first to nineth preferred embodiments so that a lift can be easily generated upon advancing, and its upper surface 56 has a camber of the shape that a curvature is gradually reduced from the front to the rear as shown in Figs. 36 to 39, while its under surface 57 on the backside has an upwardly convex camber so that air can be easily conceived thereunder in order to enhance the ground-surface-effect. At the opposite side ends of the top plate 51 are mounted end plates 53 in perpendicular to the surface of the top plate 51, that is, so as to extend in the vertical direction and the back and forth directions along the opposite side surface of the top plate 51 nearly over its entire length in the back and forth directions. As shown in Fig. 36, under a normal condition of the plane body, that is, under the condition where overloading or unbalanced loading is not present, and the plane body is stationarily lying on the water surface with a rated amount of fuel and rated number of crewmen loaded thereon, the end plates 53 take the attitude that their tail ends aligns nearly on the water surface jointly with the rear edge of the top plate 51 and their lower edges has a downward inclination of 7.7° with respect to the water surface from their tail ends towards their front ends. In other words, the lower edges of the end plates 53 have an inclination of 7.7° with respect to the water line of the plane body. As shown in Fig. 38, this inclination coincides with an attitude angle when the plane body transfers to steady ram gliding, that is, an angle of attack. By the way, an angle of attack is defined as an angle formed between the water line and a water contact line on the water surface, and as will be described later it is chosen in the range of 3° - 12°. In more particular, if a considerable part of the air exhausted from an air exhaust nozzle 54 to be described later is ejected downwards by airflow direction switching means not shown, then the air would be intercepted by the rear edge of the top plate 51 in the rear, by the end plates 53 on the left and on the right, and by a air pressure, that is, by a dynamic pressure of air corresponding to the speed of the plane body in the front, hence the plane body is lifted up by the confined air, and at the state where the rear edge of the top plate 51 and the lower edges of the side plates 53 are slightly separated from the water surface, the air would flow out in the so-called thin film form through the gap spaces. Accordingly, the angle of 7.7° shown in Fig. 36 is closely related to the angle of attack taken when the plane body performs ram gliding.

At the center of the top plate 51 is disposed a central fuselage section 55 of boat-like shape elongated in the back and forth directions for loading a crewman's seat, and an engine and other members for exhausting air. This fuselage section also functions as a large buoyancy source when the plane body floats on the water. Besides, the same fuselage section is provided with equipments loaded on the conventional ground-surface-effect wing plane, such as an engine for generating a thrust or ram air, a blower, a damper and the like. An air exhaust nozzle 54 is provided as one of these members, it produces a large thrust by strongly ejecting air backwards, and in order to appropriately change the direction of the thrust either to the left or to the right, a direction control plate for changing the direction of an exhaust airflow is provided at a location downstream of the nozzle 54, and the direction control is effected by remote manipulation. In addition, for the purpose of stabilization upon high-speed traveling such as transient gliding, steady ram gliding and the like, tail units 52 are provided in the rear portion on the left-hand and on the right-hand.

The successive states taken by the plane body when it transfers from a stationary state lying on the water surface, through a transient sliding state and an initial state of steady ram gliding up to a steady ram gliding state are as shown in Figs. 36 to 39, respectively. While the forward inclination angle of the end plates 33 was chosen at 7.7° in this preferred embodiment, the present invention should not be limited to this particular angle, but generally as the variable range of the angle of attack, a range of 3° to 12°, preferably a range of 5° to 10° could be employed. It is to be noted that if the above-described inclination angle of the end plates 53 is too large as compared to the angle of attack, then the front of the end plates 53 would come into contact with the water surface upon steady ram gliding and would make the gliding unstable, while if it is too small as compared to the angle of attack, then the amount of air confined under the lower surface of the top plate 51 in the initial condition of the steady ram gliding would become insufficient, and hence satisfactory floating cannot be realized. Accordingly, in this preferred embodiment, as an optimum value of the inclination angle, 7.7° was chosen so that stabilization upon take-off from the water can be achieved and at the same time a sufficient height of separation from the water surface can be realized.

The above-mentioned is the tenth preferred embodiment, and since aeroplanes including the ground-surface-effect wing planes are constructed generally in such manner that the pressure on the lower surfaces of the wings may become higher than the pressure on the upper surfaces of the wings in order to generate a lift, at the wing ends where air can easily move from the lower surface of the wing to the upper surface thereof, the movement of air would occur and thereby wing end swirls would be generated. The wing end swirls would naturally lower the lift, and moreover, they themselves act as resistive bodies for flying just as added bodies, hence the so-called induced drag is generated, and it obstructs the flying. Regarding this particular embodiment, the fear that the high-pressure air on the lower surface of the top plate 51 may pass under the end plates 53, then may flow round to the upper surface 56 of the top plate 51 and may generate an induced drag, cannot be absolutely denied.

Fig. 40 is a perspective view of an eleventh preferred embodiment of the present invention which provide a countermeasure for such fear. In this preferred embodiment, louver type air escapes 58 are provided in the vertical planes of the left and right end plates 53a, hence the air going to flow round from the lower surface of the top plate 51 to the side of the back surface 56 of the top plate 51 is made to flow backwards by the air escapes through the gap spaces in these louver type air escapes 58, thereby the wing end swirls are suppressed to reduce the induced drag, and thereby improvements in the lift-to-drag ratio is contemplated. Since this preferred embodiment is similar to that shown in Fig. 35 except for the point that the louver type air escapes 58 are provided, further explanation thereof will be omitted.

Fig. 41 is a perspective view of a twelveth preferred embodiment of the present invention, in which comb-shaped air escapes 59 are provided in the left and right end plates 53b, respectively. Like the eleventh preferred embodiment, the air confined under the lower surface of the top plate 51 is allowed to escape through these comb-shaped escapes 59 to the rear of the outside, and thereby the wing end swirls are suppressed. It is to be noted that while the wing end swirls are suppressed by enlarging an aspect ratio of wings in the general aeroplanes, in this preferred embodiment, the similar effects can be obtained with the aspect ratio kept intact. In addition, this preferred embodiment has the merit that since the air escape portions expand outwards in a streamline shape, an air resistance is small. In the eleventh and twelveth preferred embodiment, while the effect of suppressing wing end swirls is higher as a larger amount of air is made to pass through the louver type air escapes 58 and the comb-shaped air escapes 59 to the rear of the outside, at the same time the ram pressure is reduced, and so, as a matter of course, it is necessary to regulate the escape flow rate to an appropriate value.

As described above, according to the tenth preferred embodiment, since the lower edges of the end plates provided on the opposite sides of the plane body was inlined in the forward and downward direction by the angle equal to the angle of attack with respect to the water line, during the initial period of the steady ram gliding or during the steady ram gliding, a sufficient amount of air can be confined under the lower surface of the plane body, and so, improvement in a lift can be achieved. In addition, since the end plates become broader by the amount corresponding to the inclination angle, it becomes easy to provide louvers or the like, for instance, as in the eleventh and twelveth preferred embodiments, to eject air therethrough to the rear of the outside, thereby the wing end swirls can be suppressed, hence the lift-to-drag ratio can be enhanced, and thus there is provided a ground-surface effect wing plane which can take off from the water surface more safely at a low-speed.

It is to be noted that the above-described louver type air escapes 58 and the comb-shaped air escapes 59 can be utilized also for improving maneuvability, as will be described in the following. If the louver type air escapes 58 or the comb-shaped air escapes 59 (hereinafter called simply "louvers") mounted to the end plates 53a or 53b on the opposite sides of the top plate are held in a fully closed state, then air escape through the end plates 53a or 53b would become absent. Under this condition, the amount of air confined under the lower surface 57 of the top plate would become maximum, and the left and right sides are balanced. At this time, for instance, if the louver on the left side is somewhat opened with the louver on the right side kept fully closed, then the air would escape at a flow rate corresponding to the angle of opening, as a result, the balance between the left-hand and the right-hand would be broken, thus the lift on the left side is lowered and the drag on the same side is increased. This would facilitate left-wards turning and would bring the plane body into the state where left banking can be easily realized. Accordingly, maneuvability for the left banking to rotate leftwards would be improved. After the operation, if the louver is returned to its original state, that is, to the fully closed condition, the left and right sides would be balanced and the plane body takes the attitude for straight traveling. With respect to rightward turning and right banking, operations opposite to those described above could be performed.

As the ground-surface-effect wing plane according to the present invention is constructed in the above-described manner, the following advantages are obtained. That is, owing to the fact that a top plate having an upwardly convex surface portion along its front edge and has a principal portion of its entire width formed in an aerofoil section shape over its entire length, and end plates disposed along the opposite side surfaces of the top plate over its entire length are provided, an air resistance upon traveling can be made small, a lift can be made large and can be changed smoothly, and at the same time, lift distribution along the left and right directions can be easily restored so as to be always balanced, especially traveling that is excellent in a lateral stability can be achieved. Furthermore, thanks to the provision of a blower associated with an air exhaust duct, direction control by means of a thrust itself is made possible, and so, an excellent turning performance can be obtained. Furthermore, owing to the provision of spoilers in association with the top plate, in the course of transferring from low-speed traveling to high-speed floatable sliding, nose-up is enhanced, a lift is increased, and separation from the water surface can be facilitated. In addition, it is also possible to descend abruptly from a high-speed floating state and to stop in a short period of time. Furthermore, upon turning, banking can be realized by operating spoilers, and by jointly employing an airflow direction control damper and/or a rudder, a further excellent rotating performance can be realized. In addition, by the operations of a front end damper provided under the upwardly convex surface portion along the front edge as well as a thrust switching damper provided in the air exhaust duct, stationary hovering float of the plane body is made possible, and the course of transfer from the hovering low-speed traveling, through the transient sliding up to the high-speed floatable sliding can be realized smoothly under the condition of being subjected little to a water wave drag. Accordingly, the plane body can enter ram wing sliding with a relatively small thrust. Furthermore, by employing a blower having a tightly closed structure and provided with an air intake duct and an air exhaust duct, propagation of noises of the blower to the crewman and to the outside of the plane can be suppressed. Further, in the case of providing float members in association with the end plates, by shaping the tip end portions of the float members into a tapered form like a wedge or into a curved surface, mitigation of a water wave impact upon alighting on the water and reduction of a water wave drag upon take-off from the water can be achieved.

Still further, according to the present invention, owing to the fact that end plates serving also as floats are disposed on the opposite sides of the top plate and sled-shaped sliding plates are provided at the bottoms of these end plates and a central fuselage section as described above, the attitude of the plane body upon take-off from the water is stabilized, the body can be raised stably by a lift acting upon the center of gravity, and so, instability due to nose-up would be hardly generated. In addition, when the plane body alights on the water after it has floated up, thanks to mitigation of an impact of the take-off on the water by these sliding plates, maneuvability of the plane can be well insured without giving excessive anxiety to the crewman.

Moreover, according to the present invention, as the lower edges of the end plates are inclined in the forward and downward direction with respect to the water line, the amount of air confined under the lower surface of the top plate upon ram gliding can be increased, and thereby a lift can be improved.

Since many changes and modifications can be made to the above-described construction without departing from the spirit of the present invention, it is intended that all matter contained in the specification and illustrated in the accompanying drawings shall be interpreted to be illustrative and not as a limitation to the scope of the invention.

## Claims

1. A ground-surface-effect wing plane comprising a top plate having an upwardly convex surface portion along its front edge and having a principal portion of its entire width formed in an aerofoil section shape over its entire length, a central fuselage section provided at the center of said top plate and having a crewman's seat, end plates disposed along the opposite side surfaces of said top plate over its entire length, and a blower associated with an air exhaust duct and disposed in the rear of said central fuselage section.

2. A ground-surface-effect wing plane comprising a top plate having an upwardly convex surface portion along its front edge and having a principal portion of its entire width formed in an aerofoil section shape over its entire length, a central fuselage section provided at the center of said top plate and having a crewman's seat, end plates disposed along the opposite side surfaces of said top plate over its entire length, a blower associated with an air exhaust duct and disposed in the rear of said central fuselage section, and spoilers provided in association with said top plate.

3. A ground-surface-effect wing plane comprising a top plate having an upwardly convex surface portion along its front edge and having a principal portion of its entire width formed in an aerofoil section shape over its entire length, a central fuselage section provided at the center of said top plate and having a crewman's seat, end plates disposed along the opposite side surfaces of said top plate over its entire length, a front end cover disposed under the upwardly convex surface portion so that it can adjust an area of an opening in front of the plane body, and a blower associated with an air exhaust duct containing a thrust switching damper therein and disposed in the rear of said central fuselage section.

4. A ground-surface-effect wing plane comprising a top plate having an upwardly convex surface portion along its front edge and having a principal portion of its entire width formed in an aerofoil section shape over its entire length, a central fuselage section provided at the center of said top plate and having a crewman's seat, end plates disposed along the opposite side surfaces of said top plate over its entire length, and a blower associated with an air exhaust duct containing an airflow direction control damper therein at its exhaust port end and disposed in the rear of said central fuselage section.

5. A ground-surface-effect wing plane comprising a top plate having an upwardly convex surface portion along its front edge and having a principal portion of its entire width formed in an aerofoil section shape over its entire length, a central fuselage section provided at the center of said top plate and having a crewman's seat, end plates disposed along the opposite side surfaces of said top plate over its entire length, a blower associated with an air exhaust duct and disposed in the rear of said central fuselage section, and a vertical tail having a rudder assembled therein and disposed at the rear end of said top plate.

6. A ground-surface-effect wing plane comprising a top plate having an upwardly convex surface portion along its front edge and having a principal portion of its entire width formed in an aerofoil section shape over its entire length, a central fuselage section provided at the center of said top plate and having a crewman's seat, end plates disposed along the opposite side surfaces of said top plate over its entire length, and a blower associated with an air intake duct and an air exhaust duct and disposed in the rear of said central fuselage section.

7. A ground-surface-effect wing plane as claimed in any one of Claims 1 to 6, further comprising floats provided in association with said end plates and having their bottom portions formed in a wedge shape.

8. A ground-surface-effect wing plane as calimed in any one of Claims 1 to 6, further comprising floats provided in association with said end plates and having their bottom portions formed to have a curved surface.

9. A ground-surface-effect wing plane comprising a top plate having an upwardly convex surface portion along its front edge and having a principal portion of its entire width formed in an aerofoil section shape over its entire length, a central fuselage section provided at the center of said top plate, having a crewman's seat and serving also as a float which is long in the back and forth directions, a blower disposed in the rear of said central fuselage section, end plates disposed along the opposite side surfaces of said top plate with their principal surfaces directed in the vertical direction, whose bottom end portions also serve as floats projecting downwards from the bottom of said central fuselage section, and gliding plates formed in a sled shape and disposed at the bottom of said end plates and said central fuselage section.

10. A ground-surface-effect wing plane comprising a top plate having an upwardly convex surface portion along its front edge and having a principal portion of its entire width formed in an aerofoil section shape over its entire length, a central fuselage section provided at the center of said top plate and having a crewman's seat, end plates disposed along the opposite side surfaces of said top plate over its entire length, and a blower associated with an air exhaust duct and disposed in the rear of said central fuselage section, wherein when said plane is floating on the water surface under a normal condition, the bottom edges of said end plates have a downward inclination of 3 degrees to 12 degrees from their tail ends towards their front ends with respect to the water line.

14

Fig. 1

Fig. 2

Fig. 3

EP 0 295 652 A2

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

Fig. 31

Fig. 32

Fig. 33

(b)

$865 = \ell_2$

37

(c)

15°    37

15°

$\theta_3 = 15°$    $\theta_3 = 15°$

$150 = \ell_1$

(a)    P=150

$\theta_2 = 12°$

$\theta_1 = 4°$    37

(d)

37

$\theta_2 = 12°$    $\theta_1 = 4°$